# DEMANDE DE BREVET EUROPEEN

(11) **EP 3 675 160 A1**
(43) Date de publication de la demande: **01.07.2020**
(21) Numéro de dépôt: 19218851.4
(22) Date de dépôt: 20.12.2019
(51) Int. Cl.: H01L 23/00, H04L 9/32, H01L 23/522, H01L 23/528

(54) **CIRCUIT INTÉGRÉ SÉCURISÉ ET SON PROCÉDÉ DE RÉALISATION**

(30) Priorité: 24.12.2018 FR 1874125
(71) Demandeur: Commissariat à l'Energie Atomique et aux Energies Alternatives, 75015 Paris (FR)
(72) Inventeur: CHARPIN-NICOLLE, Christelle, 38054 GRENOBLE (FR); BERNASCONI, Sophie, 38054 GRENOBLE (FR); HALIMAOUI, Aomar, 38054 GRENOBLE (FR); PEBAY-PEYROULA, Florian, 38054 GRENOBLE (FR)
(74) Mandataire: Brevalex

(57) **Abrégé**

L'invention concerne un procédé de sécurisation d'un circuit intégré lors de sa réalisation, ledit procédé comportant les étapes suivantes :
-délimitation dudit circuit intégré (1) en une première zone dite zone standard (5a) et en une deuxième zone dite zone de sécurité (5b), et
-désalignement aléatoire dans ladite zone de sécurité (5b) entre un niveau inférieur (9b) de trous d'interconnexion et un niveau supérieur (11b) de trous d'interconnexion engendrant la formation d'une structure d'interconnexion présentant une répartition aléatoire de points de contact (71b) et non-contact (72b) électrique.

L'invention concerne également un circuit intégré sécurisé pouvant être obtenue à l'aide d'un tel procédé.

## Description

### DOMAINE TECHNIQUE

La présente invention concerne le domaine de sécurisation de circuits intégrés, notamment par des fonctions physiques non-clonables.

### ÉTAT DE LA TECHNIQUE ANTÉRIEURE

Actuellement, la contrefaçon des circuits intégrés pose un problème majeur pour les constructeurs et utilisateurs. Pour lutter contre cette contrefaçon, on cherche à trouver des moyens pour discriminer entre un circuit légitime et un circuit contrefait.

Une première solution consisterait à attribuer un identifiant unique pour chaque circuit intégré et à construire une base de données des identifiants légitimes. Cette solution n'est pas très viable car il s'avère assez simple d'émuler (ou de rejouer) un identifiant valide au moyen d'une verrue matérielle ou logicielle.

Une solution plus efficace consiste à utiliser un mécanisme de défi-réponse qui permet de réaliser une authentification en se protégeant de l'attaque par émulation (rejeu). Cette technique repose sur l'utilisation d'une fonction pour calculer la réponse à partir du défi. La fonction doit être unique pour chaque circuit intégré et non clonable. En effet, un attaquant ne doit pas être capable de recréer physiquement ou de cloner une telle fonction. Ce genre de fonctions est appelé « fonction physique non clonable » PUF (Physical Unclonable Function).

On connaît dans l'art antérieur des circuits intégrés comprenant différentes sortes de PUFs exploitant les dispersions fonctionnelles inhérentes aux circuits.

Une première technique de PUFs exploite la variabilité induite sur les temps de propagation des signaux aux limites des contraintes électroniques du circuit. Un premier exemple est un circuit intégré comprenant un PUF à arbitre consistant à insérer des signaux électriques en entrée d'un long chemin de circuits combinatoires et à détecter le signal le plus rapide. Une course est établie dans le circuit entre les différents signaux qui se propagent suivant différents chemins combinatoires et le signal qui arrive en premier est détecté par l'arbitre. Les signaux électriques en entrée définissent le challenge ou défi et le signal détecté en premier définit la réponse.

Un autre exemple est le PUF à oscillateur en anneaux décrit dans le document de Gassend et al. Intitulé « Silicon Random Functions » ; proceedings of the Computer and Communications Security Conference, Nov. 2002*.* Ce PUF est composé de plusieurs boucles de délais oscillant à des fréquences spécifiques et qui commandent des compteurs. Les boucles sont disposées de façon identique mais les dispersions technologiques inhérentes conduisent à des boucles de fréquences légèrement différentes. Ainsi, les compteurs commandés par les boucles sont utilisés pour produire les bits de réponse à un défi.

Une troisième technique de PUFs exploite les instabilités au démarrage. Par exemple, les mémoires SRAM, déjà présentes dans une grande majorité de circuits, peuvent être utilisées comme des PUFs. Le principe de base est de récupérer l'état de la mémoire au démarrage qui est normalement unique. Sur un même principe, le PUF peut être implémenté par des circuits papillons (butterfly) réalisés à partir des matrices de deux verrouillages croisés où l'état du point mémoire au démarrage est indéterminé. Cette technique est décrite dans le document de Kumar et al. intitulé « The Butterfly PUF : Protecting IP on every FPGA; Workshop on Cryptographie Hardware and Embedded Systems (CHES), Sep 2007, Vienna*.* Dans le même genre, on trouve également des circuits à anneaux bistables composés d'un nombre impair d'inverseurs et ayant aussi un état indéterminé au démarrage.

Une quatrième technique de PUFs exploite les dispersions technologiques des résistances dans un circuit. Une telle technique est décrite dans le document de R Helinski et al. intitulé « A Physical Unclonable Function Defined Using Power Distribution System Equivalent Résistance Variations » ; DAC 2009*.* Plus particulièrement, les auteurs proposent de mesurer la chute de tension dans un circuit intégré entre des plans d'alimentation et des plans de masse due aux dispersions technologiques des résistances définies par les pistes conductrices et les interconnexions du circuit. La chute de tension est proportionnelle au courant mesuré dans des inverseurs en court-circuit agencés sur toute la surface du circuit.

Toutefois, tous les PUFs décrits ci-dessus sont basés sur des fonctionnements aux limites des contraintes électroniques des circuits et sont, par conséquent, très sensibles aux variations environnementales. En particulier, des changements de températures, de tensions d'alimentation ou des interférences électromagnétiques peuvent affecter leur performance en diminuant leur robustesse et en augmentant leur volatilité (i.e. leur variabilité intra-circuit). Ainsi, pour un défi constant, le PUF peut retourner des résultats différents selon les conditions environnementales impliquant le fait qu'un circuit légitime peut éventuellement être déclaré comme étant contrefait.

Un autre problème concerne le vieillissement du circuit intégré. En effet, à cause d'un fonctionnement aux limites des contraintes électroniques, le moindre petit défaut qui peut survenir lors du vieillissement du circuit fait que le PUF ne répond plus de la même manière et, par conséquent, on ne peut plus identifier le circuit intégré.

Pour pallier à ces défauts, il est souvent nécessaire d'adjoindre au PUF un circuit de post-traitement de la réponse reçue qui est coûteux en termes d'empreinte et de consommation.

Il existe une autre technique décrite dans le document US2014/0042627 qui consiste à utiliser un copolymère diphasique qui se polymérise directement sur le circuit intégré pour former des particules permettant de créer des contacts électriques selon différentes valeurs de résistance.

Toutefois, ce genre de polymérisation dépend de la géométrie et de la nature de la couche sur laquelle le copolymère est déposé et n'assure pas un caractère très aléatoire de la distribution des valeurs résistives.

Il existe encore une autre technique décrite dans le document de Jin Miao et al., intitulé « Spliced Digital Physical Unclonable Function », IEEE TCAD 2017, consistant à dessiner des masques avec des structures aux dimensions inférieures à la résolution de la machine de lithographie. Les défauts de connexion ou non-connexion sont simulés avec un logiciel de lithographie. Toutefois, il est probable que deux puces à la même position sur deux plaques d'un même lot risquent d'être identiques ou suffisamment proches pour ne pas être discriminées.

L'objet de la présente invention est de proposer un procédé de sécurisation d'un circuit intégré remédiant aux inconvénients précités, en particulier en réalisant un PUF non répétable à caractère unique et très aléatoire ne dépendant pas de la géométrie et de la nature des couches du circuit intégré tout en étant quasiment insensible aux variations de conditions environnementales sans l'adjonction d'un circuit de post-traitement coûteux, et sans l'introduction de modifications notables dans le procédé de fabrication du circuit.

### EXPOSÉ DE L'INVENTION

Cet objectif est atteint avec un procédé de sécurisation d'un circuit intégré lors de sa réalisation, ledit circuit intégré comportant une matrice de cellules mémoires résistives, ledit procédé comportant les étapes suivantes :
- délimitation dudit circuit intégré en une première zone dite zone standard en une deuxième zone dite zone de sécurité, ladite zone de sécurité étant intégrée dans l'environnement de ladite matrice de cellules mémoires résistives, et
- utilisation d'un équipement de lithographie pour réaliser un désalignement aléatoire dans ladite zone de sécurité entre un niveau inférieur de trous d'interconnexion et un niveau supérieur de trous d'interconnexion, ledit désalignement aléatoire étant réalisé de manière structurelle en fonction d'un désalignement aléatoire intrinsèque lié audit équipement de lithographie engendrant ainsi la formation d'une structure d'interconnexion présentant une répartition aléatoire de points de contact et non-contact électrique.

Ainsi, le désalignement aléatoire entre les deux niveaux de vias engendre une connectivité complétement aléatoire entre ces deux niveaux. Ceci permet de réaliser des circuits intégrés uniques tout en les sécurisant de manière robuste et insensible aux variations de conditions environnementales. De plus, du fait que la réalisation de la structure aléatoire d'interconnexion est non maitrisée, le coût de clonage devient excessivement élevé et la rétro-ingénierie, autant par imagerie que par apprentissage, est extrêmement difficile.

Par ailleurs, le fait que le désalignement aléatoire des trous d'interconnexion entre les niveaux supérieur et inférieur soit réalisé de manière structurelle en fonction d'un désalignement aléatoire intrinsèque lié à l'équipement de lithographie implique le fait que la sécurité du circuit intégré soit issue d'une source d'incertitude complètement aléatoire et proprement inhérente au procédé de réalisation du circuit intégré lui-même. La répartition spatiale entre les points de contact et les points de non-contact diffère d'un circuit à un autre tout en restant quasiment uniforme (i.e. que la densité des points de contact reste quasiment égale à celle des points de non-contact).

En outre, le fait que ladite zone de sécurité soit intégrée dans l'environnement de ladite matrice de cellules mémoires résistives, les points de contact se confondent avec des cellules de mémoires résistives en état ON (faiblement résistif) et les points de non-contact se confondent avec des cellules de mémoires résistives en état OFF (hautement résistif). Ceci permet d'ajouter un brouillage et une protection supplémentaire en empêchant toute dé-corrélation entre la zone de sécurité et la zone standard et par conséquent, il est extrêmement difficile et largement plus coûteux pour un attaquant de remonter au modèle de la zone PUF que l'enjeu de l'attaque.

Selon un premier mode de réalisation, la sécurisation du circuit intégré s'intègre au niveau d'une structure de transistors (front-end) ou au niveau d'une structure de fin d'intégration (back-end), et comporte les étapes suivantes :
- réalisation d'un premier niveau de motifs conducteurs sur la surface desdites zones standard et de sécurité, on notera que ce premier niveau de motifs concerne plutôt le cas d'intégration en Back-end,
- dépôt sur la surface dudit premier niveau d'une couche d'isolant suivie par une couche de résine,
- lithographie pour délimiter de trous d'interconnexion inférieurs prévus dans lesdites zones standard et de sécurité,
- remplissage métallique desdits trous d'interconnexion inférieurs suivi d'un polissage,
- dépôt d'une couche de diélectrique,
- lithographie pour définir de trous d'interconnexion prévus dans lesdites zones standard et de sécurité,
- gravure de la couche de diélectrique,
- remplissage métallique desdits trous d'interconnexion supérieurs permettant de définir des connexions supérieures suivi d'une étape de polissage.

Ainsi, la sécurité et l'unicité du circuit intégré sont figées lors de la fabrication de ce circuit et sans aucune modification de ces caractéristiques initiale. En outre, ce procédé n'introduit qu'un nombre minimal d'étapes supplémentaires par rapport à un procédé de fabrication standard.

Selon un deuxième mode de réalisation, après la formation des trous d'interconnexion inférieurs et avant la réalisation des trous d'interconnexion supérieurs, ledit procédé comporte en outre les étapes intermédiaires suivantes :
- dépôt d'une multicouche intermédiaire de matériaux de mémoires résistives,
- dépôt sur ladite multicouche intermédiaire d'un matériau isolant, cette étape est optionnelle.
- lithographie et gravure de ladite couche de matériau isolant ainsi que de ladite multicouche intermédiaire de matériaux de mémoires permettant ainsi de délimiter les cellules mémoires prévues dans la zone standard tout en éliminant les matériaux de mémoires dans la zone de sécurité,
- dépôt d'une ou de plusieurs couches d'isolant(s) sur la surface des cellules mémoires de la zone standard ainsi que sur la surface dépourvue de mémoire de la zone de sécurité.

Ainsi, le circuit intégré est encore davantage sécurisé tout en n'introduisant que très peu d'étapes supplémentaires. Ceci rend extrêmement difficile l'attaque puisqu'il est encore plus difficile de remonter au modèle de la zone de sécurité.

Avantageusement, dans la zone de sécurité, les motifs supérieurs correspondant aux trous d'interconnexion supérieurs sont disposés au-dessus des motifs inférieurs correspondant aux trous d'interconnexion inférieurs selon des chevauchements et écartements prédéterminés.

Le désalignement aléatoire peut être réalisé de manière erratique ou selon une stratégie prédéterminée.

Avantageusement, lesdits chevauchements et écartements présentent des tailles et formes géométriques prédéterminées.

Avantageusement, les motifs correspondant aux trous d'interconnexion supérieurs - respectivement inférieurs - sont des formes géométriques ayant une dimension caractéristique de valeur prédéterminée « a » tandis que les motifs correspondant aux trous d'interconnexion inférieurs - respectivement supérieurs- sont des formes géométriques ayant une dimension caractéristique correspondante égale au double de ladite valeur prédéterminée « a ».

Ainsi, ce procédé exploite l'incertitude inhérente à la réalisation matérielle du circuit intégré lui-même.

Avantageusement, les motifs correspondant aux trous d'interconnexion inférieurs sont des cercles dont le diamètre est égal à la valeur prédéterminée « a » tandis que les motifs correspondant aux trous d'interconnexion supérieurs sont des cercles dont le diamètre est égal au double de ladite valeur prédéterminée « a ».

En variante, les motifs correspondant aux trous d'interconnexion supérieurs sont des cercles dont le diamètre est égal à la valeur prédéterminée « a » tandis que les motifs correspondant aux trous d'interconnexion inférieurs sont des cercles dont le diamètre est égal au double de ladite valeur prédéterminée « a ».

Avantageusement, les motifs correspondant aux trous d'interconnexion inférieurs sont des carrés dont les côtés ont une longueur de valeur prédéterminée « a » tandis que les motifs correspondant aux trous d'interconnexion supérieurs sont des rectangles dont les largeurs sont égales à ladite valeur prédéterminée « a » et dont les longueurs sont égales au double de ladite valeur prédéterminée « a ».

En variante, les motifs correspondant aux trous d'interconnexion supérieurs sont des carrés dont les côtés ont une longueur de valeur prédéterminée « a » tandis que les motifs correspondant aux trous d'interconnexion inférieurs sont des rectangles dont les largeurs sont égales à ladite valeur prédéterminée « a » et dont les longueurs sont égales au double de ladite valeur prédéterminée « a ».

Avantageusement, les motifs supérieurs sont disposés de sorte que chaque motif supérieur ait un côté quasiment superposé avec au moins un côté du motif inférieur correspondant selon une direction prédéterminée, la disposition des motifs supérieurs sur les motifs inférieurs comportant :
- une première disposition dans laquelle les motifs supérieurs se chevauchent sur les motifs inférieurs suivant ladite direction prédéterminée et selon des décalages de chevauchement égaux à environ un quart de ladite valeur prédéterminée,
- une deuxième disposition dans laquelle les motifs supérieurs se chevauchent sur les motifs inférieurs suivant ladite direction prédéterminée dans un sens opposé à celui de la première disposition et selon des décalages de chevauchement égaux à environ un quart de ladite valeur prédéterminée,
- une troisième disposition dans laquelle les motifs supérieurs sont écartés des motifs inférieurs suivant ladite direction prédéterminée et selon des écarts égaux à environ un quart de ladite valeur prédéterminée, et
- une quatrième disposition dans laquelle les motifs supérieurs sont écartés des motifs inférieurs suivant ladite direction prédéterminée dans un sens opposé à celui de la troisième disposition et selon des écarts égaux à environ un quart de ladite valeur prédéterminée.

Ainsi, les première et deuxième dispositions sont configurées pour que l'incertitude de chevauchement des motifs supérieurs par rapport aux motifs inférieurs soit pertinente pour la connexion ou non-connexion d'un point de contact selon une seule direction du plan du circuit intégré. Ceci permet de garantir une répartition aléatoire d'une puce à l'autre d'une structure de continuité et non continuité électrique dans une proportion de l'ordre de 50%. La création selon une répartition spatiale uniforme de quasi-équiprobabilité entre les points de contact et les points de non-contact permet de réaliser des circuits intégrés uniques tout en maximisant la sécurité de chaque circuit intégré.

Avantageusement, ledit circuit intégré comporte au moins un niveau supplémentaire de vias.

Ceci permet de sécuriser davantage le circuit intégré et d'empêcher toute identification visuelle des points de contact et de non contact de la structure d'interconnexion par une imagerie 2D.

L'invention concerne également un circuit intégré sécurisé comportant :
- une matrice de cellules mémoires résistives,
- une zone standard, et
- une zone de sécurité intégrée dans l'environnement de ladite matrice de cellules mémoires résistives, ladite zone de sécurité comprenant un niveau inférieur de trous d'interconnexion et un niveau supérieur de trous d'interconnexion, lesdits niveaux inférieur et supérieur de trous d'interconnexion définissant entre eux un désalignement aléatoire engendrant une structure d'interconnexion présentant une répartition aléatoire de points de contact et non-contact électrique.

### BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :
Les Figs. 1A et 1B illustrent de manière très schématique un circuit intégré sécurisé, selon un mode de réalisation de l'invention ;
Les Figs. 2A-2K illustrent de manière très schématique les étapes d'un procédé de sécurisation d'un circuit intégré, selon un premier mode de réalisation préféré de l'invention ;
La Fig. 3 illustre de manière très schématique la réalisation de la structure d'interconnexion, selon un mode de réalisation préféré de l'invention ;
Les Figs. 4A-4C illustrent de manière schématique des première et deuxième dispositions des motifs supérieurs par rapport aux motifs inférieurs dans la zone de sécurité, selon un mode de réalisation de l'invention ; et
Les Figs. 5A-5N illustrent de manière très schématique les étapes d'un procédé de sécurisation d'un circuit intégré, selon un deuxième mode de réalisation préféré de l'invention.

### EXPOSÉ DÉTAILLÉ DE MODES DE RÉALISATION PARTICULIERS

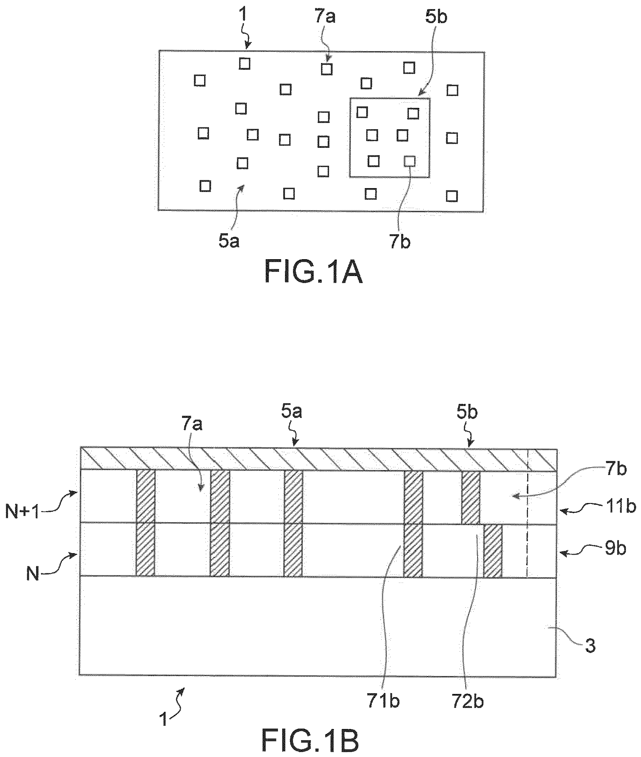

Les Figs. 1A et 1B illustrent de manière très schématique un circuit intégré sécurisé, selon un mode de réalisation de l'invention, la Fig. 1A étant une vue de dessus tandis que la Fig. 1B est une vue en coupe. Ces figures décrivent également de manière très schématique le procédé de sécurisation selon un mode de réalisation de l'invention.

Le procédé de sécurisation du circuit intégré (ou puce électronique) selon l'invention s'intègre parfaitement dans le procédé de fabrication en tant que tel du circuit intégré 1 sur une partie 3 du circuit intégré. Dans le procédé de fabrication, les éléments ou motifs sur la partie 3 sont créés selon une méthode de photo-répétition rendant chaque circuit intégré identique aux autres. L'ensemble des étapes successives sont régulées et contrôlées afin d'assurer une variabilité extrêmement faible des paramètres fonctionnels des circuits intégrés. Toutefois, la méthode de fabrication comporte des étapes d'implémentations physiques intrinsèquement aléatoires introduisant des caractéristiques discernables qui assurent l'unicité et par conséquent, la personnalisation de chaque circuit intégré 1 sans modifier leurs paramètres fonctionnels initiaux.

En effet, lors de la réalisation habituelle du circuit intégré 1, le procédé de sécurisation comporte la délimitation du circuit intégré 1 en une première zone surfacique dite zone standard 5a et en une deuxième zone surfacique dite zone de sécurité 5b.

Avantageusement, la sécurisation du circuit intégré s'intègre au niveau de fabrication de transistors (front-end) ou au niveau d'une structure de fin d'intégration (back-end). Au bout de l'un ou l'autre de ces deux niveaux, le circuit intégré 1 comporte plusieurs couches représentées grossièrement par la partie 3 du circuit intégré. Ainsi, la zone de sécurité 5b est une zone sélectionnée sur la partie 3 et dédiée pour la sécurisation du circuit intégré 1.

La zone standard 5a correspond entièrement à une partie fonctionnelle du circuit intégré 1 de base. Cette zone 5a est occupée par les composants électroniques de base reliés par des interconnexions métalliques 7a standards adaptées pour réaliser les fonctions particulières du circuit. En revanche, la zone de sécurité 5b est occupée par une fonction physique non-clonable PUF destinée à sécuriser le circuit de base.

Le fait que la zone standard 5a est distincte de la zone de sécurité 5b permet de réaliser les étapes sur ces deux zones simultanément, ce qui facilite et réduit le nombre d'étapes du procédé. L'exemple de la Fig. 1A montre que la zone de sécurité 5b est délimitée par un carré entouré par la zone standard 5a, mais bien entendu, la forme de la zone de sécurité 5b ainsi que sa disposition géométrique par rapport à la zone standard 5a peuvent être différentes.

Après la délimitation des zones standard 5a et de sécurité 5b, le procédé comporte la formation dans la zone de sécurité 5b d'une structure d'interconnexion de sécurité 7b présentant une répartition spatialement aléatoire de continuité et discontinuité électriques matérialisées par des points de contact électrique 71b et des points de non-contact électrique 72b respectivement. Cette structure d'interconnexion de sécurité 7b est engendrée par la réalisation d'un désalignement aléatoire dans la zone de sécurité 5b entre un niveau inférieur 9b de trous d'interconnexion, dit niveau N, et un niveau supérieur 11b de trous d'interconnexion, dit niveau N+1. On notera que la plaque de silicium 3 comporte déjà plusieurs niveaux qui sont inférieurs au niveau N.

Par ailleurs, le procédé comporte la formation dans la zone standard 5a d'une structure d'interconnexion standard 7a. En outre, au-dessus des structures d'interconnexion standard 7a et de sécurité 7b, le circuit intégré 1 comporte d'autres niveaux et, en particulier, des motifs conducteurs extérieurs qui, en particulier, cachent les points de contact 71b et de non-contact 72b de la structure d'interconnexion de sécurité 7b.

Habituellement, le procédé de fabrication du circuit intégré 1 comporte l'utilisation d'un équipement (ou outil) de lithographie (non représenté) qui permet de délimiter des petites zones ou motifs pour par exemple définir des trous d'interconnexion. Ce genre d'équipements présente une précision suffisante pour la réalisation des circuits intégrés parfaitement opérationnels et robustes malgré l'existence d'une petite incertitude qui est inhérente à l'équipement lui-même. La présente invention transforme cet inconvénient de manière non évidente en avantage en employant cette incertitude intrinsèque de l'équipement de lithographie comme une source de sécurisation du circuit intégré 1.

Ainsi, le désalignement aléatoire des trous d'interconnexion entre les niveaux inférieur 9b (niveau N) et supérieur 11b (niveau N+1) est réalisé de manière structurelle en fonction d'un désalignement aléatoire intrinsèque à l'équipement de lithographie. On notera par ailleurs que le désalignement lié à l'équipement de lithographie est aléatoire à la fois intra-puce et inter-puce avec une forte variabilité entre différents circuits intégrés et une grande robustesse de sécurité pour chaque circuit assurant ainsi à la fois l'unicité de chaque circuit intégré et le fait qu'un même défi donne toujours la même réponse pour un circuit intégré donné.

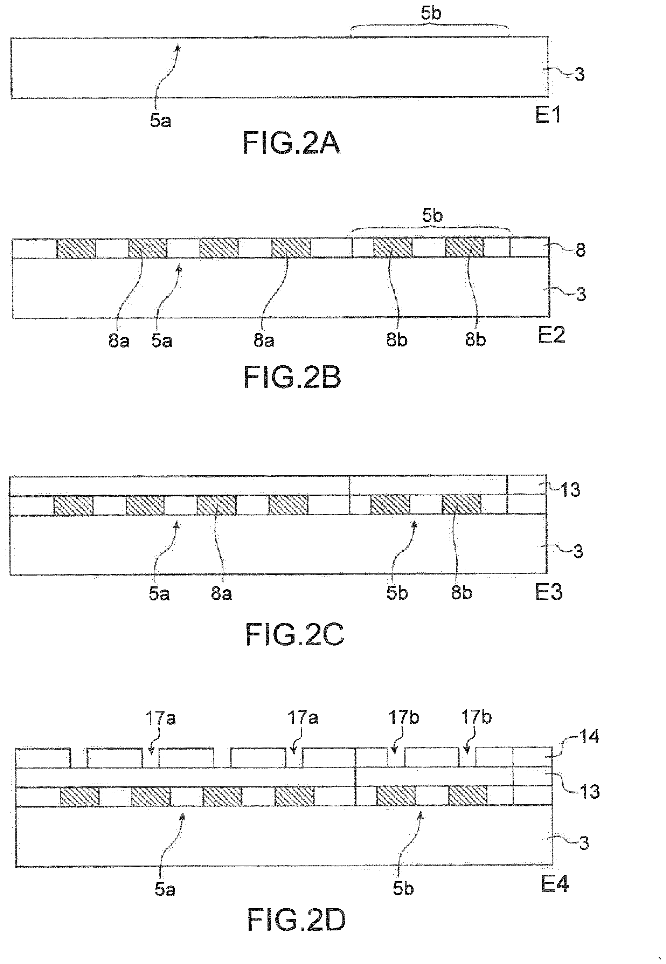

Les Figs. 2A-2K illustrent de manière très schématique les étapes d'un procédé de sécurisation d'un circuit intégré, selon un premier mode de réalisation préféré de l'invention.

De manière connue par l'homme du métier, on considère que la fabrication de la partie 3 du circuit intégré a été préalablement réalisée selon les étapes habituelles de préparation d'une couche d'oxyde sur un substrat, de transfert du dessin du circuit à reproduire à l'aide d'un masque, de gravure, de dopage, de réalisation de couches suivantes, etc.

Selon ce mode de réalisation, la sécurisation du circuit intégré 1 commence alors à la fin du front-end et s'intègre dans la suite des étapes de fabrication de composés semiconducteur au niveau du « back-end », c'est-à-dire, lors de la réalisation des premières interconnexions électriques pour adéquatement interconnecter les composants entre eux ainsi qu'avec des électrodes d'entrées-sorties.

Selon un mode préféré de réalisation de l'invention, la première étape E1 consiste à commencer avec une partie plane 3 délimitée en une zone de sécurité 5b et une zone standard 5a dont l'ensemble des procédés de fabrication en « front-end » a été réalisé, c'est-à-dire qu'une grande partie du circuit qu'on cherche à sécuriser a été fabriquée. On notera que la zone de sécurité 5b est délimitée de sorte qu'elle puisse comporter un nombre suffisant de points de contact et de non-contact pour assurer une bonne sécurité. A titre d'exemple, la zone de sécurité peut comporter une grille de points de contact et de non-contact entre environ 10x10 points et 100x100 points.

La deuxième étape E2 consiste en la réalisation d'un premier niveau 8 de motifs conducteurs 8a et 8b (dits, lignes de métal) sur la surface des zones standard 5a et de sécurité 5b de la partie 3.

Les motifs conducteurs 8a et 8b peuvent être en cuivre, en aluminium ou en un autre matériau conducteur d'électricité.

La troisième étape E3 consiste à déposer sur la surface du premier niveau 8 une couche (ou multicouche) d'isolant 13 de type diélectrique.

La quatrième étape E4 consiste à procéder à une lithographie (étalement résine, insolation et développement) pour délimiter les trous d'interconnexion 17a, 17b prévus dans les zones standard 5a et de sécurité 5b respectivement. On notera que la lithographie comporte une étape de gravure à travers un masque et peut par ailleurs, être de type optique, électronique, EUV, nano impression ou de tout autre type.

La cinquième étape E5 consiste à transférer les trous d'interconnexion 17a, 17b dans la couche de diélectrique 13. Ainsi, les étapes de lithographie et gravure forment le niveau inférieur (niveau N) 9a, 9b de trous d'interconnexion 17a, 17b dans les zones standard 5a et de sécurité 5b respectivement.

La sixième étape E6 consiste à procéder à un remplissage métallique des trous d'interconnexion 17a, 17b du niveau inférieur 9a, 9b pour former un niveau inférieur de connexions (ou vias) 27a, 27b. Le remplissage peut être réalisé en tungstène, en cuivre ou en un autre métal. Une ou plusieurs couches d'accroche peuvent être déposées au préalable. Ensuite, la surface du niveau inférieur de connexions 27a, 27b est polie (par exemple, par un procédé mécanochimique) pour délimiter les connexions.

La septième étape E7 consiste à déposer une couche (ou multicouches) de diélectrique 15 (par exemple SiN) qui permettra (permettront) de définir des motifs supérieurs représentatifs des trous supérieurs d'interconnexion dans le niveau supérieur (niveau N+1) 11a, 11b des zones standard 5a et de sécurité 5b.

Dans la zone standard 5a, des motifs supérieurs représentatifs des trous supérieurs d'interconnexion sont alignés avec les trous inférieurs d'interconnexion. Les motifs des trous supérieurs et inférieurs sont en général de mêmes tailles et de mêmes formes. Ceci permet de générer des structures de vias dans le niveau supérieur 11a (niveau N+1) qui se superposent sur les structures de vias du niveau inférieur 9a (niveau N).

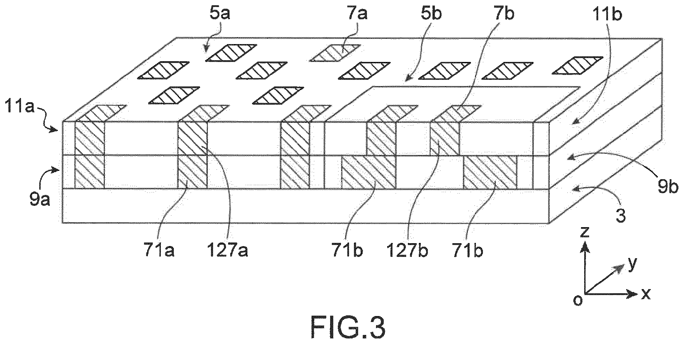

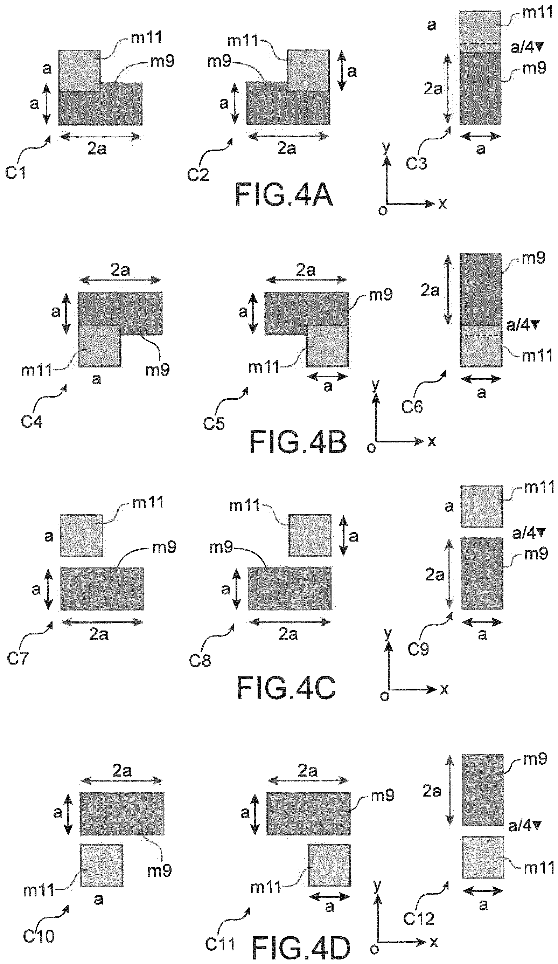

En revanche, dans la zone de sécurité 5b, les motifs supérieurs sont disposés au-dessus des trous inférieurs d'interconnexion selon des chevauchements prédéterminés et présentent en outre des tailles et formes géométriques prédéterminées (voir Figs. 3, 4A et 4B). Ces motifs supérieurs peuvent être de formes elliptiques, circulaires, rectangulaires ou autres et peuvent être différents des motifs inférieurs. On notera que le désalignement aléatoire dans la zone de sécurité 5b peut être réalisé de manière erratique et/ou selon une stratégie spécifique prédéterminée.

La stratégie spécifique consiste à concevoir dans la zone de sécurité 5b des motifs supérieurs désalignés structurellement par construction par rapport aux motifs inférieurs de telle sorte qu'en tenant compte du désalignement spécifique à l'outil de lithographie, on obtient des configurations de contact et de non-contact répondant à deux critères. Le premier critère consiste à faire en sorte que la disposition des points de contact et des points de non-contact diffère d'une puce à l'autre. Le deuxième critère concerne le fait qu'au sein d'un même circuit intégré, il est avantageux d'avoir environ 50% de points de contact et environ 50% de points de non-contact quelles que soient les conditions de désalignement. Ces deux critères assurent une performance optimale de la zone de sécurité 5b.

Avantageusement, dans la zone de sécurité 5b les motifs correspondant aux trous d'interconnexion supérieurs (respectivement inférieurs) sont des formes géométriques ayant une dimension caractéristique (par exemple, un côté d'un rectangle ou le diamètre d'un cercle) de valeur prédéterminée « a » tandis que les motifs correspondant aux trous d'interconnexion inférieurs (respectivement supérieurs) sont des formes géométriques ayant une dimension caractéristique correspondante égale au double de la valeur prédéterminée « a ».

Par exemple, les motifs correspondant aux trous d'interconnexion inférieurs dans la zone de sécurité 5b peuvent être des cercles dont le diamètre est égal à la valeur prédéterminée « a » tandis que les motifs correspondant aux trous d'interconnexion supérieurs sont des cercles dont le diamètre est égal au double de ladite valeur prédéterminée « a ». En variante, le diamètre des cercles supérieurs est égal à la valeur prédéterminée « a » tandis que le diamètre des cercles inférieurs est égal au double de la valeur prédéterminée « a ».

La huitième étape E8 consiste à procéder à une lithographie, consistant à délimiter des motifs dans une résine 16, pour définir des trous d'interconnexion 117a, 117b prévus dans le niveau supérieur 11a, 11b.

La neuvième étape E9 consiste à transférer les trous d'interconnexion 117a, 117b dans la ou les couches de diélectrique 15 à partir des motifs réalisés en lithographie. Ainsi, les étapes de lithographie et gravure forment le niveau supérieur 11a, 11b de trous d'interconnexion 117a, 117b prévus dans les zones standard 5a et de sécurité 5b respectivement.

La dixième étape E10 concerne le remplissage métallique des trous d'interconnexion 117a, 117b du niveau supérieur 11a, 11b pour former un niveau supérieur de connexions (vias) 127a, 127b. Cette étape est suivie par un polissage de la surface du niveau supérieur 11a, 11b de connexions 127a, 127b permettant ainsi de délimiter les connexions.

Ainsi, dans la zone standard 5a, le niveau supérieur de connexions 127a dans le niveau N+1 se superpose sur le niveau inférieur de connexions 27a du niveau N formant une structure de connexion standard 7a. En revanche, dans la zone de sécurité 5b, les connexions 127b dans le niveau supérieur (niveau N+1) 11b sont aléatoirement désalignées sur celles 27b du niveau inférieur (niveau N) 9b formant une structure d'interconnexion de sécurité 7b comportant des points de contact 71b et des points de non-contact 72b.

Une onzième étape E11 montre que d'autres niveaux 12 peuvent être réalisés par la suite, par exemple des lignes métalliques ou des plots de connexion.

Ce mode de réalisation montre que l'ensemble des étapes successives sont régulées et contrôlées afin d'assurer une variabilité extrêmement faible des paramètres clés de fonctionnalité du circuit dans la zone standard 5a tout en permettant par construction une réalisation non maîtrisée de la structure aléatoire d'interconnexion 7b dans la zone de sécurité 5b. Chaque circuit intégré 1 issu du procédé de sécurisation dispose ainsi dans sa zone de sécurité 5b d'une structure physique d'interconnexion 7b unique dont le processus de fabrication est aléatoire et non maîtrisé et, par conséquent, excessivement difficile à cloner. Ceci renforce l'unicité de chaque puce électronique permettant son identification de manière très précise tout en rendant le clonage extrêmement difficile.

La réalisation de la structure d'interconnexion aléatoire 7b forme une structure de continuité/discontinuité électrique entre les différents motifs conducteurs. Cette structure peut alors être utilisée pour appliquer un protocole d'authentification défi-réponse. Plus particulièrement, une partie des motifs conducteurs 8b et 12 est configurée pour recevoir un stimulus définissant un défi, tandis qu'une autre partie de ces motifs conducteurs 8b et 12 est configurée pour fournir un signal de sortie correspondant à la réponse au défi. La réponse est ainsi dépendante de la continuité ou discontinuité électrique de la structure d'interconnexion aléatoire propre à la puce électronique ainsi qu'au défi utilisé. Les motifs conducteurs recevant le stimulus forment une entrée du circuit intégré tandis que ceux fournissant la réponse forment la sortie du circuit intégré. Les motifs conducteurs sélectionnés pour former l'entrée ou la sortie sont prédéterminés selon les spécifications du protocole d'authentification.

En variante, on peut injecter un signal d'entrée définissant un défi dans les vias au niveau N et de lire le signal de sortie correspondant à la réponse au défi au niveau des vias N+1. Si les deux vias niveaux N et N+1 sont connectés, les signaux d'entrée et de sortie seront comparables. En revanche, si les deux vias des niveaux N et N+1 ne sont pas connectés à cause du désalignement, les signaux d'entrée et de sortie seront différents.

Après la réalisation des circuits intégrés sécurisés, on procède à une phase « d'enrôlement » (enrollment, en anglais) qui consiste à construire une base de données contenant des couples légitimes de « défi-réponse » pour chaque circuit intégré 1. Concrètement, pour chaque circuit intégré 1, un testeur génère aléatoirement un certain nombre N de défis ou challenges C et les adresse au circuit intégré 1. Chaque défi C est constitué d'un stimulus qui est appliqué à l'entrée du circuit intégré 1 et la réponse R à chaque défi C est récupérée à la sortie du circuit intégré 1. En effet, le PUF qui définit une fonction secrète F calcule la réponse R à chaque défi C (i.e. R=F(C)). Le testeur récupère les N réponses R associées aux N défis C et stocke les N couples de défi-réponse (C, R) correspondants dans une base de données (non représentée).

Ainsi, l'authentification d'un circuit intégré 1 sécurisé peut être testée tout au long de son cycle de vie. Plus particulièrement, un utilisateur d'un circuit intégré 1 peut demander au fabricant (ou à l'entité qui possède la base de données des couples de défi-réponse) un défi (ou un couple défi-réponse). Le défi C est appliqué au circuit intégré 1 et ce dernier calcule la réponse R au défi C. Ensuite, l'utilisateur (ou le fabriquant) compare la réponse R générée par le circuit intégré 1 avec celle stockée dans la base de données afin de vérifier la légitimité du circuit intégré 1. On notera que, pour plus de sécurité, le couple défi-réponse déjà utilisé est ensuite supprimé de la base de données pour éviter tout rejeu.

La Fig. 3 illustre de manière très schématique la réalisation de la structure d'interconnexion, selon un mode de réalisation préféré de l'invention.

Comme indiqué précédemment, les motifs inférieurs et supérieurs de la zone standard sont de mêmes tailles et de mêmes formes en particulier, ils peuvent être des carrés.

En revanche, les motifs d'un des masques inférieur et supérieur dans la zone de sécurité sont des carrés dont les côtés ont une longueur de valeur prédéterminée « a » tandis que les motifs de l'autre masque sont des rectangles dont les largeurs sont égales à la valeur prédéterminée « a » et dont les longueurs sont égales au double de la valeur prédéterminée « a ». La valeur prédéterminée « a » est sélectionnée en fonction de l'incertitude de l'équipement de lithographie utilisé afin de tirer profit de manière optimale du désalignement aléatoire intrinsèque de cet équipement. L'incertitude de désalignement de l'équipement de lithographie est limitée dans un intervalle compris entre environ -a/2 et +a/2. Par ailleurs, la valeur prédéterminée « a » est par exemple, comprise entre environ 2nm et 100nm. On notera que les rectangles peuvent éventuellement être remplacés par des ellipses.

L'exemple illustré sur la Fig. 3 montre que dans la zone standard 5a les vias dans les niveaux inférieur 9a et supérieur 11a présentent des sections carrées. En revanche, dans la zone de sécurité 5b les vias dans le niveau inférieur 9b ont des sections rectangulaires tandis que les vias dans le niveau supérieur 11b ont des sections carrées. On notera qu'en variante, dans la zone de sécurité 5b, les vias dans le niveau inférieur 9b ont des sections carrées tandis que les vias dans le niveau supérieur 11b ont des sections rectangulaires.

Plus particulièrement, un repère orthonormé (O ; x, y, z) est représenté où z est une direction selon l'épaisseur de la plaque 3 du circuit intégré 1 (i.e. dans le sens d'empilement de couches) et où le plan (x, y) est parallèle à un plan de la partie 3 du circuit intégré. Avec cette convention, les sections des vias inférieurs et supérieurs sont repérées selon un plan (x, y).

De même, les motifs des masques inférieur et supérieur utilisés pour la réalisation des vias inférieurs et supérieurs respectivement peuvent être repérés selon un plan (x, y).

Les Figs. 4A à 4D montrent de manière schématique des première, deuxième, troisième et quatrième dispositions des motifs supérieurs par rapport aux motifs inférieurs dans la zone de sécurité, selon un mode de réalisation de l'invention.

Les motifs supérieurs dans la zone de sécurité 5b sont disposés de sorte que chaque motif supérieur ait un côté quasiment superposé sur un côté du motif inférieur correspondant selon une direction prédéterminée du plan (x, y) du circuit intégré 1 sachant que les autres côtés du motif supérieur sont décalés par rapport aux côtés correspondants du motif inférieur.

Selon les première et deuxième dispositions (Figs. 4A et 4B), les motifs supérieurs se chevauchent sur les motifs inférieurs selon des décalages de chevauchement égaux à environ un quart de la valeur prédéterminée « a ». Ces décalages de chevauchements « a/4 » sont réalisés selon des première et troisième dispositions ayant quasiment les mêmes proportions. La différence entre ces première et troisième dispositions est le fait que le sens du décalage de chevauchement dans la première disposition est opposé à celui dans la troisième disposition.

Par contraste, les motifs supérieurs des troisième et quatrième dispositions (Figs. 4B et 4D) ne se chevauchent pas sur les motifs inférieurs et sont au contraire volontairement écartés en conception suivant la direction prédéterminée par environ « a/4 ». La différence entre les troisième et quatrième dispositions est le fait que le sens du décalage dans la deuxième disposition est opposé à celui dans la quatrième disposition.

On notera que les motifs supérieurs et inférieurs dans la zone standard (non représenté) sont alignés de sorte que le désalignement intrinsèque n'affecte pas la fonctionnalité du circuit intégré.

L'exemple de la Fig. 4A montre une première disposition des motifs supérieurs m11 (définissant les vias du niveau supérieur m11) en forme de carrés sur les motifs inférieurs m9 (définissant les vias du niveau inférieur m9) en forme de rectangle selon des première C1, deuxième C2 et troisième C3 configurations dans la zone de sécurité 5b. Les côtés des carrés sont orientés selon les directions X et Y et ont une longueur de valeur « a ». Les largeurs et longueurs des rectangles ont les valeurs « a » et « 2a » respectivement. Les longueurs des rectangles dans les première C1 et deuxième C2 configurations sont orientées dans la direction X tandis que la longueur du rectangle dans la troisième configuration C3 est orientée dans la direction Y. Le côté gauche du carré de la première configuration C1 est superposé dans la direction Y sur la largeur du côté gauche du rectangle correspondant tandis que le côté droit du carré de la deuxième configuration C2 est superposé dans la direction Y sur la largeur du côté droit du rectangle correspondant. Les deux côtés du carré de la troisième configuration C3 sont alignés dans la direction Y avec les deux largeurs respectivement du rectangle correspondant. En outre, les carrés couvrent une partie des rectangles selon la direction Y dans le sens négatif d'une valeur environ égale à « a/4 ».

L'exemple de la Fig. 4B montre une deuxième disposition des motifs supérieurs m11 sur les motifs inférieurs m9 selon des quatrième C4, cinquième C5 et sixième C6 configurations. Les motifs supérieurs m11 et inférieurs m9 sont les mêmes que ceux de la Fig. 4A et sont orientés de la même manière. Toutefois, les première (Fig. 4A) et deuxième (Fig. 4B) dispositions se distinguent par le fait que les sens du décalage de chevauchement sont opposés. Ainsi, les carrés dans la deuxième disposition couvrent une partie des rectangles selon la direction Y dans le sens positif d'une valeur environ égale à « a/4 ».

L'exemple de la Fig. 4C montre une troisième disposition des motifs supérieurs m11 sur les motifs inférieurs m9 selon des septième C7, huitième C8 et neuvième C9 configurations. Cette troisième disposition se distingue de la première disposition de la Fig. 4A uniquement par le fait qu'au lieu de couvrir une partie des rectangles, les carrés sont au contraire écartés des rectangles selon la direction Y dans le sens positif d'une valeur environ égale à « a/4 ».

L'exemple de la Fig. 4D montre une quatrième disposition des motifs supérieurs m11 sur les motifs inférieurs m9 selon des dixièmes C10, onzième C11 et douzième C12 configurations. Cette quatrième disposition se distingue de la deuxième disposition de la Fig. 4B uniquement par le fait qu'au lieu de couvrir une partie des rectangles, les carrés sont au contraire écartés des rectangles selon la direction Y dans le sens négatif d'une valeur environ égale à « a/4 ».

Les première, deuxième, troisième, et quatrième dispositions des Figs. 4A à 4D sont réalisées par construction et sont, par conséquent, considérées comme l'état initial avant le désalignement aléatoire lié au procédé de lithographie spécifique à l'outil de lithographie. En outre, le désalignement ou décalage aléatoire engendré par le dispositif de lithographie sur l'état initial tel que défini par les différentes dispositions peut se réaliser dans les directions X et Y et dans les deux sens positif (>0) ou négatif (<0). Ces décalages aléatoires dans les directions X et Y sont notés par la suite ΔX et ΔY respectivement. Autrement dit, ΔX et ΔY représentent les variations aléatoires du niveau N+1 par rapport au niveau N dans les directions X et Y respectivement.

Les première, deuxième, troisième, et quatrième dispositions sont configurées de sorte que la production des points de contact et non contact ne dépend que du sens de décalage selon une seule direction prédéterminée qui est ici à titre d'exemple, la direction Y. On notera par ailleurs que la valeur de « a » est choisie pour que le décalage aléatoire dans un sens ou dans un autre ne dépasse pas « a/2 ».

En effet, le désalignement aléatoire engendré par le dispositif de lithographie sur un état initial selon la première disposition (Fig. 4A) comporte les cas suivants :
- Si ΔX>0 (au maximum égal à +a/2) et ΔY >0 (au maximum égal à +a/2) alors on aura 50% de chance d'avoir contact entre les vias et 50% de chance de ne pas avoir de contact entre les vias.
- Si ΔX>0 (au maximum égal à +a/2) et ΔY <0 (au maximum égal à -a/2) alors on aura toujours contact entre les vias.
- Si ΔX<0 (au maximum égal à -a/2) et ΔY >0 (au maximum égal à -a/2 alors on aura 50% de chance d'avoir contact entre les vias et 50% de chance de ne pas avoir contact entre les vias.
- Si ΔX<0 (au maximum égal à -a/2) et ΔY<0 (au maximum égal à -a/2) alors on aura toujours un contact entre les vias.

A partir des quatre cas ci-dessus relatifs à la première disposition, on constate que lorsque le décalage aléatoire est positif dans la direction Y (i.e. ΔY >0) alors on a 50% de chance d'avoir contact entre les vias et 50% de chance de ne pas avoir de contact entre les vias. En revanche, lorsque le décalage aléatoire est négatif dans la direction Y (i.e. ΔY <0) alors on a toujours un contact entre les vias supérieurs et inférieurs quel que soit le sens de décalage dans la direction X.

Le désalignement aléatoire engendré par le dispositif de lithographie sur un état initial selon la deuxième disposition (Fig. 4B) comporte les cas suivants :
- Si ΔX>0 (au maximum égal à +a/2) et ΔY >0 (au maximum égal à +a/2) alors on aura toujours contact entre les vias.
- Si ΔX>0 (au maximum égal à +a/2) et ΔY <0 (au maximum égal à -a/2) alors on aura 50% de chance d'avoir contact entre les vias et 50% de chance de ne pas avoir de contact entre les vias.

- Si ΔX<0 (au maximum égal à -a/2) et ΔY >0 (au maximum égal à -a/2) alors on aura toujours contact entre les vias.
- Si ΔX<0 (au maximum égal à -a/2) et ΔY<0 (au maximum égal à -a/2) alors on aura 50% de chance d'avoir contact entre les vias et 50% de chance de ne pas avoir de contact entre les vias.

A partir des quatre cas ci-dessus relatifs à la deuxième disposition, on constate que lorsque le décalage aléatoire est positif dans la direction Y (i.e. ΔY >0) alors on a toujours un contact entre les vias supérieurs et inférieurs quel que soit le sens de décalage dans la direction X. En revanche, lorsque le décalage aléatoire est négatif dans la direction Y (i.e. ΔY <0) alors on a 50% de chance d'avoir contact entre les vias et 50% de chance de ne pas avoir de contact entre les vias quel que soit le sens de décalage dans la direction X.

Le désalignement aléatoire engendré par le dispositif de lithographie sur un état initial selon la troisième disposition (Fig. 4C) comporte les cas suivants :
- Si ΔX>0 (au maximum égal à +a/2) et ΔY >0 (au maximum égal à +a/2) alors on n'aura pas de contact entre les vias.
- Si ΔX>0 (au maximum égal à +a/2) et ΔY <0 (au maximum égal à -a/2) alors on aura 50% de chance d'avoir contact entre les vias et 50% de chance de ne pas avoir de contact entre les vias.
- Si ΔX<0 (au maximum égal à -a/2) et ΔY >0 (au maximum égal à -a/2 alors on n'aura pas de contact entre les vias.
- Si ΔX<0 (au maximum égal à -a/2) et ΔY<0 (au maximum égal à -a/2) alors on aura 50% de chance d'avoir contact entre les vias et 50% de chance de ne pas avoir de contact entre les vias.

A partir des quatre cas ci-dessus relatifs à la troisième disposition, on constate que lorsque le décalage aléatoire est positif dans la direction Y (i.e. ΔY >0) alors on n'a pas de contact entre les vias supérieurs et inférieurs quel que soit le sens de décalage dans la direction X. En revanche, lorsque le décalage aléatoire est négatif dans la direction Y (i.e. ΔY <0) alors on a 50% de chance d'avoir contact entre les vias et 50% de chance de ne pas avoir de contact entre les vias quel que soit le sens de décalage dans la direction X.

Le désalignement aléatoire engendré par le dispositif de lithographie sur un état initial selon la quatrième disposition (Fig. 4D) comporte les cas suivants :
- Si ΔX>0 (au maximum égal à +a/2) et ΔY >0 (au maximum égal à +a/2) alors on aura 50% de chance d'avoir contact entre les vias et 50% de chance de ne pas avoir de contact entre les vias.
- Si ΔX>0 (au maximum égal à +a/2) et ΔY <0 (au maximum égal à -a/2) alors on n'aura pas de contact entre les vias.
- Si ΔX<0 (au maximum égal à -a/2) et ΔY >0 (au maximum égal à -a/2) alors on aura 50% de chance d'avoir contact entre les vias et 50% de chance de ne pas avoir de contact entre les vias.
- Si ΔX<0 (au maximum égal à -a/2) et ΔY<0 (au maximum égal à -a/2) alors on n'aura pas de contact entre les vias.

A partir des quatre cas ci-dessus relatifs à la quatrième disposition, on constate que lorsque le décalage aléatoire est positif dans la direction Y (i.e. ΔY >0) alors on a 50% de chance d'avoir contact entre les vias et 50% de chance de ne pas avoir de contact entre les vias quel que soit le sens de décalage dans la direction X. En revanche, lorsque le décalage aléatoire est négatif dans la direction Y (i.e. ΔY <0) alors on n'a pas de contact entre les vias supérieurs et inférieurs quel que soit le sens de décalage dans la direction X.

Ainsi, en réalisant 25% des motifs selon la première disposition, 25% des motifs selon la deuxième disposition, 25% des motifs selon la troisième disposition et 25% des motifs selon la quatrième, on obtient 50% de points de contact et 50% de points de non contact dans chaque puce. De plus, étant donné que les valeurs des désalignements aléatoires sont différentes d'une puce à l'autre, les configurations des points de contact et de non contact varient en conséquence.

Ce mode de réalisation présente l'avantage d'intégrer directement le PUF dans un masque existant en jouant astucieusement sur le décalage du niveau de via supérieur N+1 par rapport au niveau du via inférieur N afin d'obtenir une répartition aléatoire d'une puce à l'autre de zones contactées ou non contactées, et de plus, dans une proportion de l'ordre de 50%.

En effet, le bilan des quatre dispositions ci-dessus est résumé ci-dessous.
1. Si ΔX>0 (au maximum égal à +a/2) et ΔY >0 (au maximum égal à +a/2) :
   - dans la première disposition, on obtient 50% de points de contact et 50% de points de non contact dans chaque puce ;
   - dans la deuxième disposition, on aura toujours un contact entre les vias ;
   - dans la troisième disposition, on n'a pas de contact entre les vias supérieurs et inférieurs ; et
   - dans la quatrième disposition, on obtient 50% de points de contact et 50% de points de non contact dans chaque puce.
2. Si ΔX>0 (au maximum égal à +a/2) et ΔY <0 (au maximum égal à -a/2) :
   - dans la première disposition, on aura toujours un contact entre les vias ;
   - dans la deuxième disposition, on obtient 50% de points de contact et 50% de points de non contact dans chaque puce ;
   - dans la troisième disposition, on obtient 50% de points de contact et 50% de points de non contact dans chaque puce ; et
   - dans la quatrième disposition, on n'a pas de contact entre les vias supérieurs et inférieurs.
3. Si ΔX<0 (au maximum égal à -a/2) et ΔY >0 (au maximum égal à -a/2) :
   - dans la première disposition, on obtient 50% de points de contact et 50% de points de non contact dans chaque puce ;
   - dans la deuxième disposition, on aura toujours un contact entre les vias ;
   - dans la troisième disposition, on n'a pas de contact entre les vias supérieurs et inférieurs ; et
   - dans la quatrième disposition, on obtient 50% de points de contact et 50% de points de non contact dans chaque puce.
4. Si ΔX<0 (au maximum égal à -a/2) et ΔY<0 (au maximum égal à -a/2) :
   - dans la première disposition, on aura toujours un contact entre les vias ;
   - dans la deuxième disposition, on obtient 50% de points de contact et 50% de points de non contact dans chaque puce ;
   - dans la troisième disposition, on obtient 50% de points de contact et 50% de points de non contact dans chaque puce ; et
   - dans la quatrième disposition, on n'a pas de contact entre les vias supérieurs et inférieurs.

On notera que la valeur de chevauchement ou d'écartement « a/4» imposée initialement est choisie par rapport à un équipement de lithographie donné. En cas de changement d'équipement de lithographie, on peut réobtenir des performances analogues en imposant en plus un décalage en X et en Y selon une autre valeur, ce qui n'oblige pas à reconcevoir un autre niveau de masque.

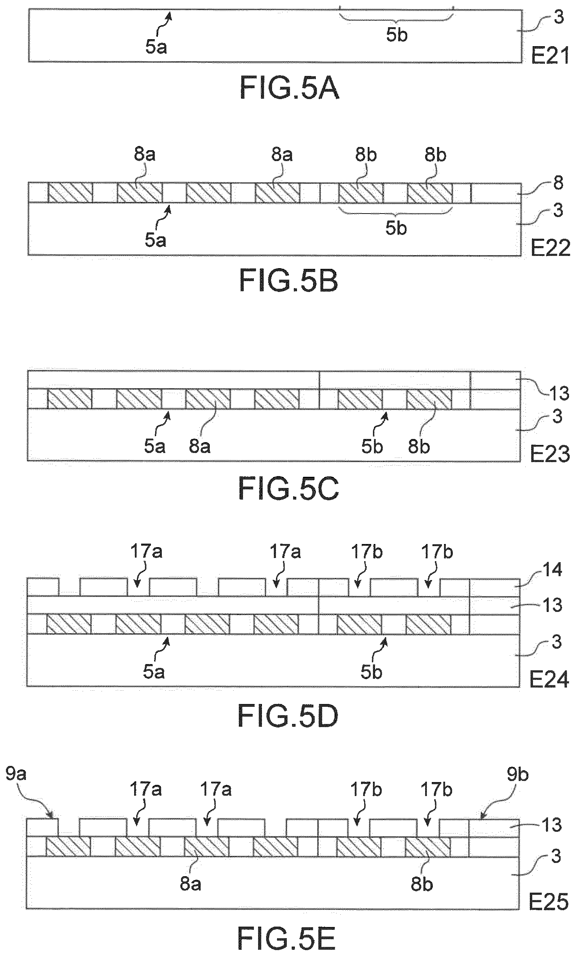

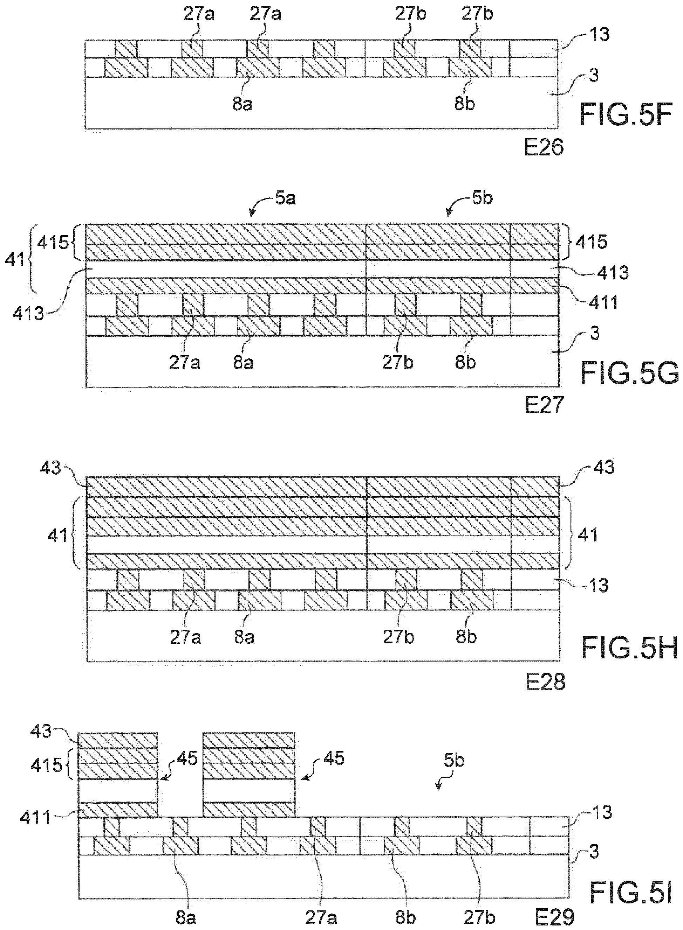

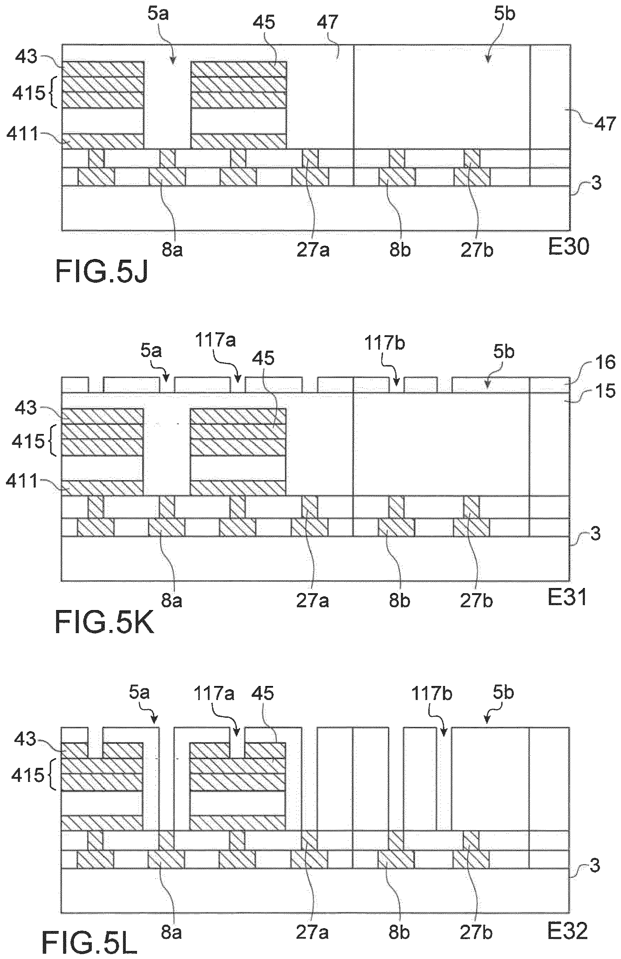

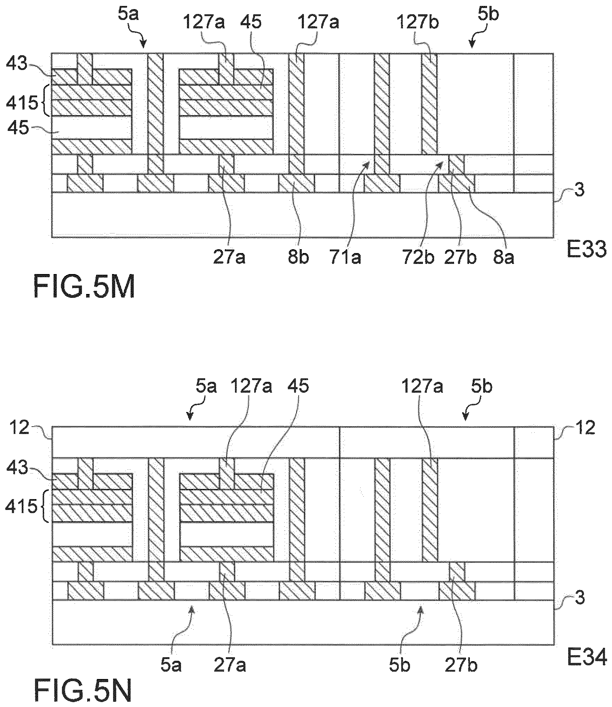

La Fig. 5 illustre de manière très schématique des étapes d'un procédé de sécurisation d'un circuit intégré, selon un deuxième mode de réalisation préféré de l'invention.

Ce deuxième mode de réalisation est identique à celui du premier mode de réalisation sauf que la zone de sécurité PUF est avantageusement intégrée dans l'environnement d'une matrice de cellules de mémoires résistives prévues dans le circuit intégré. Plus particulièrement, les étapes E21-E26 et E32-E34 sont similaires aux étapes E1-E6 et E8-E11 respectivement tandis que les étapes E27-E31 concernent la fabrication des cellules mémoires.

Comme précédemment, la première étape E21 consiste à commencer avec une partie plane 3 délimitée en une zone de sécurité 5b et une zone standard 5a dont tout le procédé de fabrication dite « front-end » a été réalisé, c'est-à-dire qu'une grande partie du circuit qu'on cherche à sécuriser a été fabriquée.

La deuxième étape E22 consiste en la réalisation d'un premier niveau 8 de motifs conducteurs 8a et 8b sur la surface des zones standard 5a et de sécurité 5b de la partie 3.

La troisième étape E23 consiste à déposer une couche (ou multicouche) d'isolant 13 (par exemple comportant des couches de SiN et de SiO₂) sur la surface du premier niveau 8.

La quatrième étape E24 consiste à procéder à une étape de lithographie consistant à délimiter des motifs dans une résine 14, ce qui permettra par la suite de délimiter les trous d'interconnexion 17a, 17b prévus dans les zones standard 5a et de sécurité 5b.

La cinquième étape E25 consiste à transférer les trous d'interconnexion 17a, 17b préalablement définis par lithographie par un procédé de gravure sèche pour reproduire les motifs réalisés en lithographie. Ainsi, les étapes de lithographie et gravure permettent de former le niveau inférieur (niveau N) 9a, 9b de trous d'interconnexion 17a, 17b dans les zones standard 5a et de sécurité 5b.

La sixième étape E26 consiste à réaliser à un remplissage métallique (par dépôt) des trous d'interconnexion 17a, 17b du niveau inférieur 9a, 9b pour former un niveau inférieur de connexions (ou vias) 27a, 27b. Ensuite, la surface du niveau inférieur de connexions 27a, 27b est polie afin de délimiter les vias d'interconnexion.

Après la formation des vias inférieurs de connexions, ce deuxième mode de réalisation se distingue par rapport au premier mode de réalisation par l'introduction de nouvelles étapes E27 à E31.

En effet, la septième étape E 27 consiste à déposer une multicouche intermédiaire 41 de matériaux de mémoires résistives sur toute la plaque plane inférieure de connexion. Cette multicouche 41 de matériaux de mémoires peut comprendre une couche métallique d'électrodes inférieures 411 (en option), une couche centrale de commutation d'états 413, et une couche métallique d'électrodes supérieures 415. Chacune des couches métalliques d'électrodes inférieures 411 (Bottom Electrodes) et supérieures 415 (Top Electrodes) est par exemple composée d'une couche de TiN. A titre d'exemple, la couche centrale de commutation d'états 413 peut être composée d'une couche ou de plusieurs couches d'oxyde métallique (Transition Metal Oxide) TMO tel le HfO₂. Toujours à titre d'exemple, la Top électrode peut être une bi-couche constituée d'une couche de métal «getter» d'oxygène comme le Ti (déposée immédiatement sur la couche de Hf02) et d'une couche de TiN.

La huitième étape E 28 consiste à déposer sur la multicouche intermédiaire 41 un matériau isolant 43 (de type oxyde ou nitrure) destiné à définir par la suite des cellules ou motifs mémoires uniquement dans la zone standard 5a (i.e. hors PUF). Dans ce cas, la couche 41 est un masque dur. On notera que cette étape est optionnelle.

La neuvième étape E 29 consiste à réaliser une lithographie suivie par une gravure de la couche 43 puis de la multicouche intermédiaire 41 de matériaux de mémoires permettant de délimiter les cellules mémoires 45 prévues dans la zone standard 5a et permettant d'enlever les matériaux de mémoires dans la zone de sécurité 5b.

A la fin de cette étape, on obtient dans la zone standard 5a des motifs de taille déterminé définissant les cellules mémoires 45. En revanche, dans la zone de sécurité 5b non protégée par la résine, l'intégralité des matériaux déposés pour la réalisation des cellules mémoires est gravé.

La dixième étape E30 consiste à déposer une ou plusieurs couche(s) d'isolant(s) 47 à la fois dans la zone standard 5a et la zone de sécurité 5b. Cette couche 47 (par exemple une couche de SiN) est généralement suivie par une étape de polissage. Le cas représenté montre un polissage s'arrêtant dans la couche d'isolant 43 non débouchant sur l'électrode supérieure 415, on pourrait également avoir un polissage avec arrêt sur l'électrode supérieure 415.

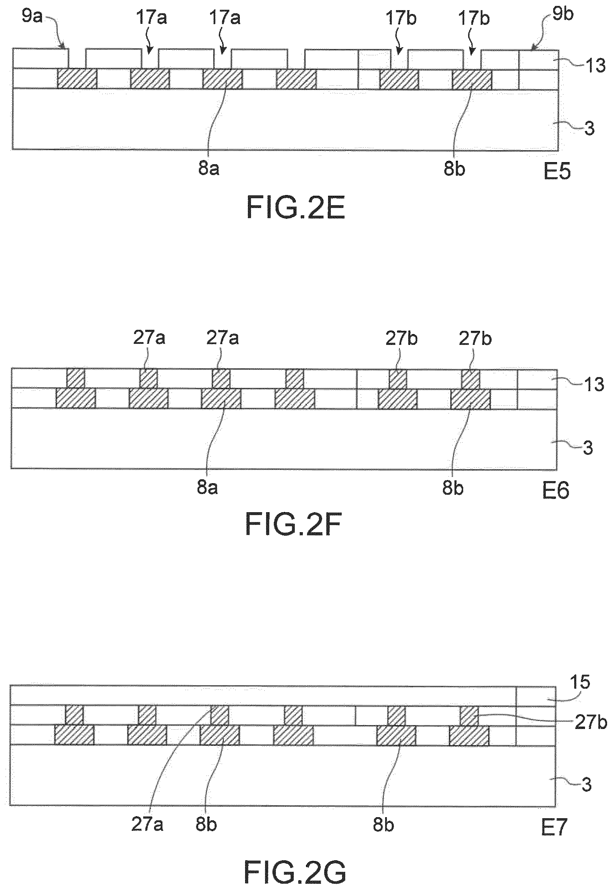

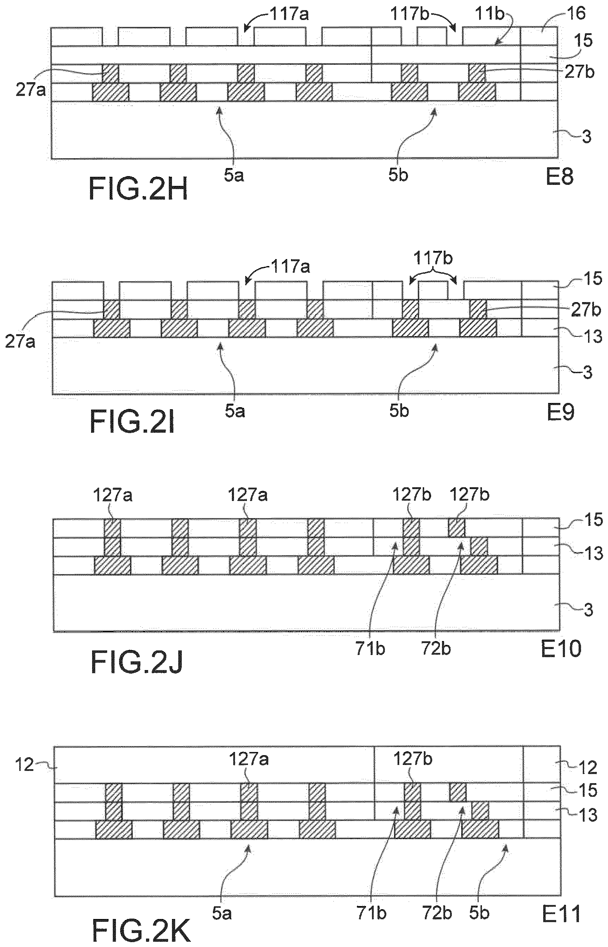

Ensuite, on réalise comme précédemment le niveau supérieur de connexions (vias) selon des étapes similaires aux étapes E8-E11 de la Fig. 2.

Le masque utilisé pour l'étape de lithographie permet de définir des motifs supérieurs représentatifs des trous supérieurs d'interconnexion dans les zones standard 5a et de sécurité 5b. Les motifs supérieurs sont disposés au-dessus des motifs inférieurs de manière standard dans la zone standard 5a et selon des chevauchements, écartements, et formes prédéterminés dans la zone de sécurité 5b comme décrit précédemment en relation aux Figs. 3, et 4A à 4D.

En effet, on utilise la même stratégie spécifique que précédemment consistant à concevoir les motifs supérieurs tels que les structures des trous inférieurs et supérieurs d'interconnexions dans la zone de sécurité 5b soient désalignées structurellement de telle sorte qu'en tenant compte du désalignement spécifique à l'outil de lithographie, on obtient des configurations de contact et de non-contact qui diffèrent d'une puce à l'autre tout en ayant environ 50% de contact et environ 50% de non contact.

La onzième étape E31 consiste à procéder à une lithographie pour isoler les trous d'interconnexion 17a, 17b prévue dans le niveau supérieur au travers d'une résine 16.

La douzième étape E32 consiste à transférer les trous d'interconnexion 17a à partir des motifs réalisés en lithographie et de déboucher sur les points mémoires. Ainsi, les étapes de lithographie et gravure permettent de former le niveau supérieur de trous d'interconnexion 17a, 17b prévus dans les zones standard 5a et de sécurité 5b.

Optionnellement, on pourrait venir, après l'étape de polissage mécanochimique décrite à l'étape E30, déposer un diélectrique (servant de masque dur).

Alternativement, on pourrait procéder à une étape de polissage mécano-chimique comme décrite sur la Fig. 5J, puis réaliser une étape de gravure permettant de déboucher sur la surface supérieure des points mémoires, de déposer une multicouche de diélectriques, et de venir ouvrir les trous d'interconnexion, comme décrits sur les Figs. 5K et 5L.

La treizième étape E33 consiste à procéder à un remplissage métallique des trous d'interconnexion 17a, 17b du niveau supérieur. Cette étape de remplissage est suivie d'une étape de polissage mécano-chimique. A l'issue de ces étapes, un niveau supérieur de connexions (vias) est formé.

Ainsi, dans la zone standard 5a, les structures de connexions (vias) dans le niveau supérieur (niveau N+1) se superposent par l'intermédiaire des cellules mémoires 45, sur les structures de connexions (vias) dans le niveau inférieur (niveau N). En revanche, dans la zone de sécurité 5b, les structures de connexions (vias) dans le niveau supérieur sont aléatoirement désalignées sur celles du niveau inférieur formant ainsi des points de contact électrique et de non-contact électrique.

La quatorzième étape E34 montre que d'autres niveaux peuvent être réalisés au-dessus de ces connexions, et en particulier, des motifs conducteurs extérieurs 12 comportant des lignes métalliques ou plots de connexion.

Selon ce deuxième mode de réalisation les points de contact dans la zone de sécurité (PUF) se confondent avec des cellules de mémoires résistives en état faiblement résistif (ON) tandis que les points de non-contact se confondent avec des cellules de mémoires résistives en état hautement résistif (OFF) et par conséquent, il n'est pas du tout évident d'identifier la zone PUF au sein des zones mémoires. En effet, la coexistence de la matrice de mémoires résistives et de la zone de sécurité ne permettra pas de dé-corréler la zone PUF de la zone non PUF et par conséquent il est extrêmement difficile et très coûteux de remonter au modèle de la zone PUF.

Par ailleurs, il est envisageable d'avoir également des cellules mémoires résistives fonctionnelles dans la zone de sécurité PUF sachant qu'on ne saura pas les distinguer par rapport à celles qui ne le sont pas. En effet, les états des mémoires réelles varient et on ne peut pas savoir dans quel état se trouve chaque cellule mémoire.

Finalement, on notera que les modes de réalisation du procédé de sécurisation selon les Figs. 2 à 5 sont transposables au « Front End », c'est-à-dire, lors de la fabrication des transistors.

## Revendications

1. Procédé de sécurisation d'un circuit intégré lors de sa réalisation, ledit circuit intégré (1) comportant une matrice de cellules mémoires (45) résistives, ledit procédé comportant les étapes suivantes :
- délimitation dudit circuit intégré (1) en une première zone dite zone standard (5a) et en une deuxième zone dite zone de sécurité (5b), ladite zone de sécurité (5b) étant intégrée dans l'environnement de ladite matrice de cellules mémoires résistives, et
- utilisation d'un équipement de lithographie pour réaliser un désalignement aléatoire dans ladite zone de sécurité (5b) entre un niveau inférieur (9b) de trous d'interconnexion et un niveau supérieur (11b) de trous d'interconnexion, ledit désalignement aléatoire étant réalisé de manière structurelle en fonction d'un désalignement aléatoire intrinsèque lié audit équipement de lithographie engendrant ainsi la formation d'une structure d'interconnexion présentant une répartition aléatoire de points de contact (71b) et non-contact (72b) électrique.

2. Procédé selon la revendication 1, **caractérisé en ce que** la sécurisation du circuit intégré s'intègre au niveau d'une structure de transistors ou au niveau d'une structure de fin d'intégration, et comporte les étapes suivantes :
- réalisation d'un premier niveau (8) de motifs conducteurs sur la surface desdites zones standard (5a) et de sécurité (5b),
- dépôt sur la surface dudit premier niveau (8) d'une couche d'isolant (13) suivie par une couche de résine (14),
- lithographie pour délimiter de trous d'interconnexion inférieurs (117a, 117b) prévus dans lesdites zones standard (5a) et de sécurité (5b),
- remplissage métallique desdits trous d'interconnexion inférieurs (17a, 17b) suivi de polissage,
- dépôt d'une couche de diélectrique (15) suivie par une couche de résine (16),
- lithographie pour définir de trous d'interconnexion supérieurs (17a, 17b) prévus dans lesdites zones standard (5a) et de sécurité (5b),
- remplissage métallique desdits trous d'interconnexion supérieurs (17a, 17b) permettant de définir des connexions supérieurs suivi de polissage.

3. Procédé selon la revendication 2, **caractérisé en ce qu'**après la formation des trous d'interconnexion inférieurs (17a, 17b) et avant la réalisation des trous d'interconnexion supérieurs (17a, 17b), ledit procédé comporte en outre les étapes intermédiaires suivantes:
- dépôt d'une multicouche intermédiaire (41) de matériaux de mémoires résistives,
- dépôt sur ladite multicouche intermédiaire (41) d'un matériau isolant (43),
- lithographie et gravure de ladite couche de matériau isolant (43) ainsi que de ladite multicouche intermédiaire (41) de matériaux de mémoires permettant ainsi de délimiter les cellules mémoires (45) prévues dans la zone standard (5a) tout en éliminant les matériaux de mémoires dans la zone de sécurité (5b),
- dépôt d'une ou de plusieurs couches d'isolant(s) (47) sur la surface des cellules mémoires de la zone standard ainsi que sur la surface dépourvue de mémoire de la zone de sécurité.

4. Procédé selon la revendication 2 ou 3, **caractérisé en ce que** dans la zone de sécurité (5b) les motifs supérieurs correspondant aux trous d'interconnexion supérieurs sont disposés au-dessus des motifs inférieurs correspondant aux trous d'interconnexion inférieurs selon des chevauchements et écartements prédéterminés.

5. Procédé selon la revendication 4, **caractérisé en ce que** lesdits chevauchements et écartements présentent des tailles et formes géométriques prédéterminées.

6. Procédé selon la revendication 4 ou 5, **caractérisé en ce que** dans la zone de sécurité (5b) les motifs correspondant aux trous d'interconnexion supérieurs - respectivement inférieurs - sont des formes géométriques ayant une dimension caractéristique de valeur prédéterminée « a » tandis que les motifs correspondant aux trous d'interconnexion inférieurs - respectivement supérieurs- sont des formes géométriques ayant une dimension caractéristique correspondante égale au double de ladite valeur prédéterminée « a ».

7. Procédé selon la revendication 4 à 6, **caractérisé en ce que** dans la zone de sécurité (5b) les motifs correspondant aux trous d'interconnexion inférieurs sont des cercles dont le diamètre est égale à la valeur prédéterminée « a » tandis que les motifs correspondant aux trous d'interconnexion supérieurs sont des cercles dont le diamètre est égale au double de ladite valeur prédéterminée « a ».

8. Procédé selon la revendication 4 à 6, **caractérisé en ce que** dans la zone de sécurité (5b) les motifs correspondant aux trous d'interconnexion supérieurs sont des cercles dont le diamètre est égale à la valeur prédéterminée « a » tandis que les motifs correspondant aux trous d'interconnexion inférieurs sont des cercles dont le diamètre est égale au double de ladite valeur prédéterminée « a ».

9. Procédé selon la revendication 4 à 6, **caractérisé en ce que** dans la zone de sécurité (5b) les motifs correspondant aux trous d'interconnexion inférieurs sont des carrés dont les côtés ont une longueur de valeur prédéterminée « a » tandis que les motifs correspondant aux trous d'interconnexion supérieurs sont des rectangles dont les largeurs sont égales à ladite valeur prédéterminée « a » et dont les longueurs sont égales au double de ladite valeur prédéterminée « a ».

10. Procédé selon la revendication 4 à 6, **caractérisé en ce que** dans la zone de sécurité (5b) les motifs correspondant aux trous d'interconnexion supérieurs sont des carrés dont les côtés ont une longueur de valeur prédéterminée « a » tandis que les motifs correspondant aux trous d'interconnexion inférieurs sont des rectangles dont les largeurs sont égales à ladite valeur prédéterminée « a » et dont les longueurs sont égales au double de ladite valeur prédéterminée « a ».

11. Procédé selon la revendication 4 à 6, **caractérisé en ce que** les motifs supérieurs sont disposés de sorte que chaque motif supérieur ait un côté quasiment superposé avec au moins un côté du motif inférieur correspondant selon une direction prédéterminée, et **en ce que** la disposition des motifs supérieurs sur les motifs inférieurs comporte :
- une première disposition dans laquelle les motifs supérieurs se chevauchent sur les motifs inférieurs suivant ladite direction prédéterminée et selon des décalages de chevauchement égaux à environ un quart de ladite valeur prédéterminée,
- une deuxième disposition dans laquelle les motifs supérieurs se chevauchent sur les motifs inférieurs suivant ladite direction prédéterminée dans un sens opposé à celui de la première disposition et selon des décalages de chevauchement égaux à environ un quart de ladite valeur prédéterminée,
- une troisième disposition dans laquelle les motifs supérieurs sont écartés des motifs inférieurs suivant ladite direction prédéterminée et selon des écarts égaux à environ un quart de ladite valeur prédéterminée, et
- une quatrième disposition dans laquelle les motifs supérieurs sont écartés des motifs inférieurs suivant ladite direction prédéterminée dans un sens opposé à celui de la troisième disposition et selon des écarts égaux à environ un quart de ladite valeur prédéterminée.

12. Procédé selon l'une quelconque des revendications précédentes, **caractérisé en ce que** ledit circuit intégré (1) comporte au moins un niveau de conducteurs sur au moins une couche supérieure au-dessus de la structure d'interconnexion.

13. Circuit intégré (1) sécurisé comportant :
- une matrice de cellules mémoires (45) résistives,
- une zone standard (5a), et
- une zone de sécurité (5b) intégrée dans l'environnement de ladite matrice de cellules mémoires résistives, ladite zone de sécurité (5b) comprenant un niveau inférieur (9b) de trous d'interconnexion et un niveau supérieur (11b) de trous d'interconnexion, lesdits niveaux inférieur (9b) et supérieur (11b) de trous d'interconnexion définissant entre eux un désalignement aléatoire engendrant une structure d'interconnexion présentant une répartition aléatoire de points de contact (71b) et non-contact (72b) électrique.
